# EUROPÄISCHE PATENTSCHRIFT

(11) **EP 1 319 615 B1**
(45) Veröffentlichungstag und Bekanntmachung des Hinweises auf die Patenterteilung: **22.09.2004**
(21) Anmeldenummer: 02027023.7
(22) Anmeldetag: 03.12.2002
(51) Int. Cl.: B65G 53/04, B65G 53/52, B65G 53/16, C25C 3/14

(54) **Anlage zum Beschicken einer Mehrzahl von Verbrauchern mit Pulverförmigen Schüttgut**
Installation for feeding a plurality of users with powdered bulk material
Installation pour le chargement des utilisateurs avec matière en vrac pulverulent

(30) Priorität: 13.12.2001 DE 10162398
(43) Veröffentlichungstag der Anmeldung: 18.06.2003
(73) Patentinhaber: Möller Materials Handling GmbH, D-25421 Pinneberg (DE)
(72) Erfinder: Von Geldern, Klaus, 21037 Hamburg (DE); Irmscher, Volkmar, Dipl.-Ing., 22880 Wedel (DE); Sorger, Heino, Dipl.-Ing., 21423 Winsen/Luhe (DE)
(74) Vertreter: Patentanwälte Hauck, Graalfs, Wehnert, Döring, Siemons, Schildberg

(56) Entgegenhaltungen:
- WO-A-84/01560
- DE-A- 3 310 452
- US-A- 4 938 848

## Beschreibung

Die Erfindung bezieht sich auf eine Anlage zum Beschicken einer Mehrzahl von Verbrauchern, z. B. von Zellen von Aluminiumschmelzöfen mit pulverförmigem Aluminiumoxid nach dem Patentanspruch 1.

Aus EP 0 122 925 ist eine Anlage bekannt geworden, bei der ein Vorratsbehälter, beispielsweise für Aluminiumoxid, mit einer pneumatischen Förderrinne verbunden ist. Die Förderrinne weist eine Anzahl von seitlichen Abgängen auf, die jeweils mit einer pneumatischen Förderrinne verbunden sind, die ihrerseits Abgänge aufweist für einzelne Zellen eines Aluminiumschmelzofens.

Aus EP 0 224 436 ist eine Anlage zum Beschicken von Schüttgutbehältern bekannt, bei der eine pneumatische Förderleitung in Abständen mit den Behältern über eine Ventilanordnung verbunden ist. Die Ventilanordnung ist derart, daß das Ventil automatisch schließt, wenn der Füllstand im Behälter einen vorgegebenen Wert erreicht.

Aus der DE 33 10 452 ist auch eine Anlage zur pneumatische Beschickung einer Vielzahl von Verbrauchsstellen mit pulverförmigen Gut bekannt.

Der Erfindung liegt die Aufgabe zugrunde, eine Anlage zum Beschicken einer Mehrzahl von Verbrauchern, z. B. von Zellen von Aluminiumschmelzöfen mit pulverförmigem Aluminiumoxid zu schaffen, mit der mit verhältnismäßig geringem Energieaufwand eine große Anzahl von Zellen versorgt werden kann.

Diese Aufgabe wird durch die Merkmale des Patentanspruchs 1 gelöst.

Bei der erfindungsgemäßen Anlage ist das Silo, z. B. für Aluminiumoxid mit einer Druckgefäß- oder Pumpenfördervorrichtung verbunden, die ihrerseits eine pneumatische Förderleitung versorgt. Druckgefäß- bzw. Pumpenfördervorrichtungen für die Schüttgutförderung sind allgemein bekannt. Mit Hilfe dieser Systeme läßt sich mit einem relativ niedrigen Energieaufwand eine große Länge überbrücken. Es ist daher möglich, eine Vielzahl, auch entfernt angeordneter Abnahmestellen mit dem Fördergut, z. B. mit Aluminiumoxid, zu versorgen. Erfindungsgemäß sind an die Förderleitungen im Bereich der zu versorgenden Stellen, z. B. der Aluminiumschmelzöfen, sogenannte Vorlage- oder Zwischenbehälter angeordnet, die über Ventile mit der Förderleitung verbunden sind. Der Vorlagebehälter ist seinerseits über mindestens eine pneumatische Förderrinne mit einer Mehrzahl von Verbrauchern, z. B. von Zellen des Aluminiumschmelzofens verbunden, wobei die pneumatische Förderrinne Abgänge je Zelle des Ofens aufweist.

Eine pneumatische Förderrinne zur Förderung von Schüttgut ist ebenfalls bekannt. Sie hat für die unmittelbare Beschickung z. B. von Aluminiumöfen den erheblichen Vorteil, daß eine druckdichte Abdichtung der Ofenzellen nicht erforderlich ist. Bei Verwendung einer pneumatischen Förderleitung an dieser Stelle ist eine druckdichte Abdichtung unumgänglich, weil ansonsten erhebliche Staubmengen aus den Ofenzellen austreten und die Umgebung des Ofens verunreinigen würden.

Es versteht sich, daß vor- und nachstehend unter Förderrinne auch ein Rohr bezeichnet werden kann, das im unteren Bereich einen separaten mit Luft durchströmbaren Kanal aufweist, dessen nach oben weisende Begrenzung permeabel ist, so daß auf diese Weise die gewünschte Fluidisierung des zu fördernden Schuttgutes erzielt wird.

Bei einer festen Verbindung der Förderrinne mit dem Vorlagebehälter und dem jeweiligen Zugang zu den Verbrauchern, z. B. den Zellen des Aluminiumschmelzofens besteht die Gefahr, daß aufgrund der baulichen Gegebenheiten eine Anpassung der Förderrinnen in Längsrichtung erforderlich ist. Daher sieht eine Ausgestaltung der Erfindung vor, daß die Förderrinnen einen mit dem Vorlagebehälter verbundenen ersten Rinnenabschnitt aufweist und einen zweiten Abschnitt, der mit dem seitlichen Abgang verbunden und der mit dem ersten Rinnenabschnitt teleskopisch zusammenwirkt. Auf diese Weise kann eine räumliche Anpassung der Förderrinnen erfolgen. Außerdem ist es möglich, die Lage des Vorlagebehälters zu ändern, ohne daß die Anschlüsse am Aluminiumschmelzofen bzw. die Förderrinnen geändert werden müssen.

Der zweite teleskopisch mit dem ersten Rinnenabschnitt zusammenwirkende Abschnitt kann ebenfalls als pneumatische Förderrinne ausgebildet sein, indem er mit einem siebartigen Auflockerungsblech versehen und an Druckluft angeschlossen wird. Auf diese Weise ist gewährleistet, daß eine problemlose Förderung des Schüttgutes bis zum Abgang, z. B. zum Aluminiumschmelzofen, gesichert ist.

Das Füllventil zwischen pneumatischer Förderleitung und Vorlagebehälter ist steuerbar. Es muß naturgemäß verhindert werden, daß der Vorlagebehälter überfüllt wird und gegebenenfalls einen Stau in der Förderleitung verursacht. Daher ist erfindungsgemäß eine Steuervorrichtung vorgesehen für die Betätigung des Ventils, und die Steuervorrichtung spricht auf eine Füllstandsmeßvorrichtung an, die feststellt, wenn das Niveau im Vorlagebehälter einen bestimmten oberen Wert erreicht.

Es ist denkbar, einen weiteren Füllstandsmesser im Vorlagebehälter vorzusehen, der anspricht, wenn der Behälter sich dem Leerzustand nähert. In diesem Fall wird dann das Ventil wieder geöffnet. Während des Betriebs der Aluminiumschmelzöfen wird z.B. diskontinuierlich Aluminiumoxid durch die pneumatische Förderleitung gefördert. Da der Verbrauch pro Zeiteinheit bekannt ist, kann die Fördermenge pro Zeiteinheit diesem Verbrauch angepaßt sein. Dies gilt auch für den Vorlagebehälter, so daß gegebenenfalls auch auf eine Füllstandsmessung für den unteren Pegel verzichtet werden kann. Das Ventil kann somit zeitabhängig gesteuert werden, d.h. nach dem Schließen nach einer gewissen Zeit wieder geöffnet werden, wobei diese Zeit derjenigen entspricht, die erforderlich ist, damit jede Ofenzelle kontinuierlich aus dem Vorlagebehälter versorgt wird.

Nach einer weiteren Ausgestaltung der Erfindung sind zwei oder mehr pneumatische Förderrinnen je Vorlagebehälter vorgesehen, vorzugsweise auf gegenüberliegenden Seiten, die jeweils zu einer Verbraucheranordnung, z. B. einem Aluminiumofen mit einer Vielzahl von Elektrolytzellen führen.

Nach einer anderen Ausgestaltung der Erfindung ist eine Überwachungs- und Anzeigevorrichtung vorgesehen für die Ventile. Sie stellt fest, ob das Ventil auch tatsächlich geschlossen ist, wenn von der Füllstandsmeßvorrichtung bzw. der Steuervorrichtung ein entsprechendes Betätigungssignal für das Ventil zur Verstellung in die Schließstellung abgegeben worden ist. Ebenso muß festgestellt werden, ob das Ventil in die Öffnungsstellung gebracht worden ist, nachdem eine erneute Befüllung des Vorlagebehälters erforderlich geworden ist.

Als Ventil kann ein herkömmliches Füllventil für derartige pneumatische Fördersysteme verwendet werden. Nach einer Ausgestaltung der Erfindung ist vorgesehen, daß das Ventil als Ventilglied eine einen axialen Durchgang aufweisende Ventilkugel ist, die drehbar in einem Ventilgehäuse gelagert ist. Ein flexibler Dichtring ist auf der der Förderleitung zugewandten Seite der Ventilkugel angeordnet und wirkt mit der Ventilkugel zusammen. Auf der gegenüberliegenden Seite der Ventilkugel ist ausreichend Freiraum zum Ventilgehäuse vorgesehen. Für die Betätigung der Ventilkugel dient zum Beispiel eine pneumatische Betätigungsvorrichtung, mit der die Ventilkugel um einen Winkel von 90° verschwenkt wird von der Öffnungs- in die Schließstellung und umgekehrt. Der Innendruck im Vorlagebehälter ist geringer als die unter Überdruck stehende pneumatische Förderleitung. Im geschlossenen Zustand des Ventils entsteht mithin eine Druckdifferenz am Dichtring, so daß dieser zwangsläufig gegen die Kugeloberfläche gedrückt wird. Die Dichtwirkung erhöht sich mit zunehmender Druckdifferenz.

Die Ventilkugel wird nur einseitig auf der Seite des höheren Druckes abgedichtet. Auf der Seite des niedrigen Drucks ist keine Abdichtung vorhanden, vielmehr weist das Gehäuse in diesem Bereich einen großen Freiraum gegenüber der Kugel auf. Dadurch werden die erforderlichen Kräfte zum Öffnen und Schließen der Kugel auf ein Mindestmaß verringert. Außerdem kann bei senkrechtem Einbau des Füllventils insbesondere in der Offenposition keine Ablagerung von Schüttgut stattfinden. Dies erhöht die Betriebssicherheit des Ventils, weil die erforderlichen Kräfte zum Schalten des Ventils berechenbar bleiben.

Nach einer weiteren Ausgestaltung der Erfindung ist vorgesehen, daß die Förderleitung an gegenüberliegenden Seiten eines zylindrischen nach unten offenen Gehäuses angeschlossen ist und das Ventilgehäuse am unteren Ende des zylindrischen Gehäuses dichtend angebracht ist.

Ein Ausführungsbeispiel der Erfindung wird nachfolgend anhand von Zeichnungen näher erläutert.
- Fig. 1: zeigt schematisch eine Anlage nach der Erfindung.
- Fig. 2: zeigt eine Einzelheit der Anlage nach der Erfindung.
- Fig. 3: zeigt perspektivisch ein Füllventil für die Anlage nach Fig. 1.
- Fig. 4: zeigt einen Schnitt durch das Füllventil nach Fig. 3.
- Fig. 5: zeigt im Schnitt eine Förderrinne für die Anlage nach Fig. 1.

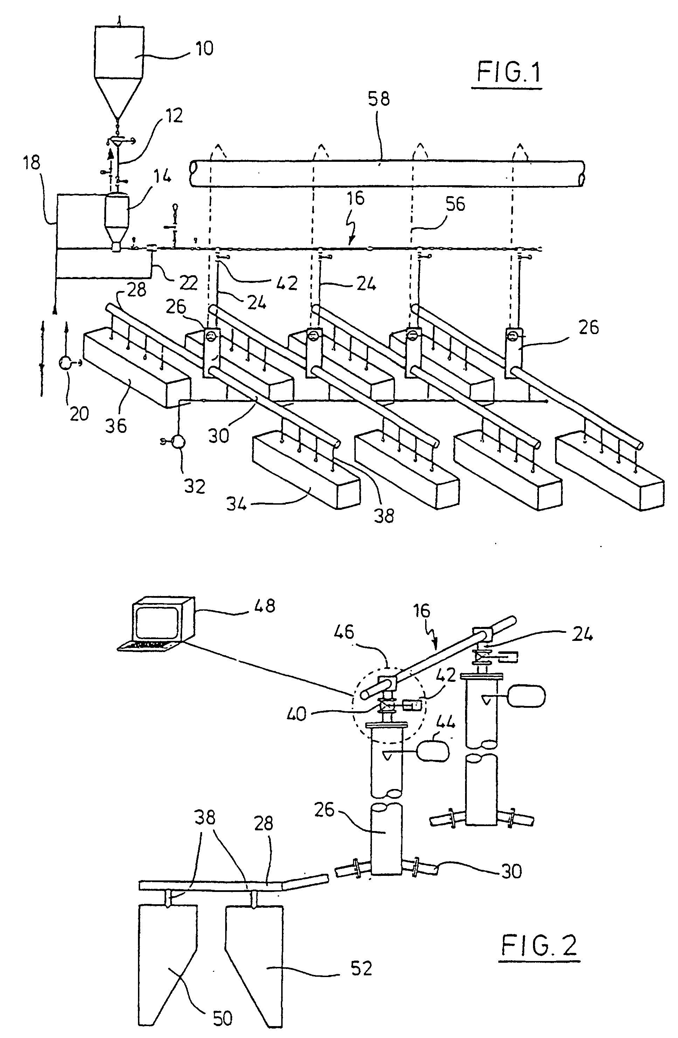

In Fig. 1 ist ein Vorratsbehälter 10 zu erkennen, der zum Beispiel Aluminiumoxidpulver enthält. Es wird über eine Leitung 12, die ein Sieb und mindestens ein Absperrorgan enthält, auf die weiter nicht eingegangen wird, zu einem Druckgefäß 14 gefördert. Das Druckgefäß ist mit einer pneumatischen Förderleitung 16 verbunden. Das Druckgefäß steht in Verbindung mit einer Druckluftleitung 18, die an einen Kompressor 20 oder an ein Druckluftnetz angeschlossen ist. Die Druckluftleitung 18 ist einmal zum oberen Ende des Druckgefäßes 14 und zum anderen zum unteren Ende geführt, wie in Fig. 1 ersichtlich. Außerdem geht eine Abzweigung 22 unmittelbar in die Förderleitung 16. Mit Hilfe des gezeigten Systems kann Schüttgut, hier Aluminiumoxidpulver durch die Förderleitung 16 gefördert werden, und, falls erforderlich über eine relativ große Strecke, ohne daß zu große Druckverluste und Druckabfälle entstehen.

In Abständen sind an die pneumatische Förderleitung 16 Abzweigleitungen 24 angeschlossen, die zu jeweils einem Vorlagebehälter 26 führen. An die Vorlagebehälter 26 sind am unteren Ende auf gegenüberliegenden Seiten pneumatische Förderrinnen 28, 30 angeschlossen. Die pneumatischen Förderrinnen 28, 30, die von einem Verdichter 32 mit Druckluft versorgt werden, sind zu einzelnen Aluminiumschmelzöfen 34, 36 geführt, wobei pro Zelle der Öfen 34 ein oder mehrere Abgänge für die Förderrinne 30 vorgesehen sind, wie zum Beispiel bei 38 dargestellt.

In Fig. 2 sind vergrößert zwei Vorlagebehälter 26 dargestellt. Man erkennt, daß in der Abzweigleitung 24 jeweils ein Ventil 40 angeordnet ist, das von einer pneumatischen Betätigungsvorrichtung 42 betätigt wird.

Im Vorlagebehälter 26, der zum Beispiel ein anlagespezifisches Volumen von 0,5 m³ aufweist, ist eine Füllstandsmeßvorrichtung 42 vorgesehen, die feststellt, wenn der Pegel im Behälter 26 einen Höchststand erreicht. Für diesen Fall wird dann das Ventil 40 geschlossen. Es wird wieder geöffnet, wenn entweder eine vorgegebene Zeit verstrichen ist oder wenn durch eine weitere Füllstandsmessung ein Mindestpegel im Behälter 26 festgestellt worden ist.

Den Ventilen 40 ist auch eine Überwachungsvorrichtung zugeordnet, die z.B. von Endschaltern gebildet ist, wie durch den strichpunktierten Kreis 46 angedeutet. Diese stellt fest, ob nach Erteilung eines Betätigungsbefehls für das Ventil 40 dieses die beabsichtigte Position eingenommen hat oder nicht, was z. B. mit Hilfe von Endschalter festgestellt werden kann. Dies kann zum Beispiel durch einen Monitor 48 angezeigt werden.

Aus Fig. 2 ist ferner zu ersehen, wie eine Förderrinne 28 mit zwei Zellen 50, 52 eines Ofens 36 oder 34 verbunden ist.

Die Vorlagebehälter 26 sind über Leitungen 56 mit einem Abgaskanal 58 verbunden. In diese tritt die aus dem Vorlagebehälter entweichende Luft ein, wenn sie über die pneumatische Förderleitung 16 gefüllt werden.

Während des Betriebes wird Aluminiumoxidpulver in der Förderleitung 16 gefördert und bei geöffnetem Ventil 42 in einen Vorlagebehälter hinein. Da der Verbrauch der Aluminiumschmelzöfen 34, 36, bekannt ist, bedarf es keiner besonderen Regelung oder Einstellung für die einzustellenden Fördermengen pro Zeiteinheit. Allerdings ist auch denkbar, eine entsprechende Regelung vorzusehen bzw. einen Stopp der Förderung, wenn entsprechende Umstände vorliegen.

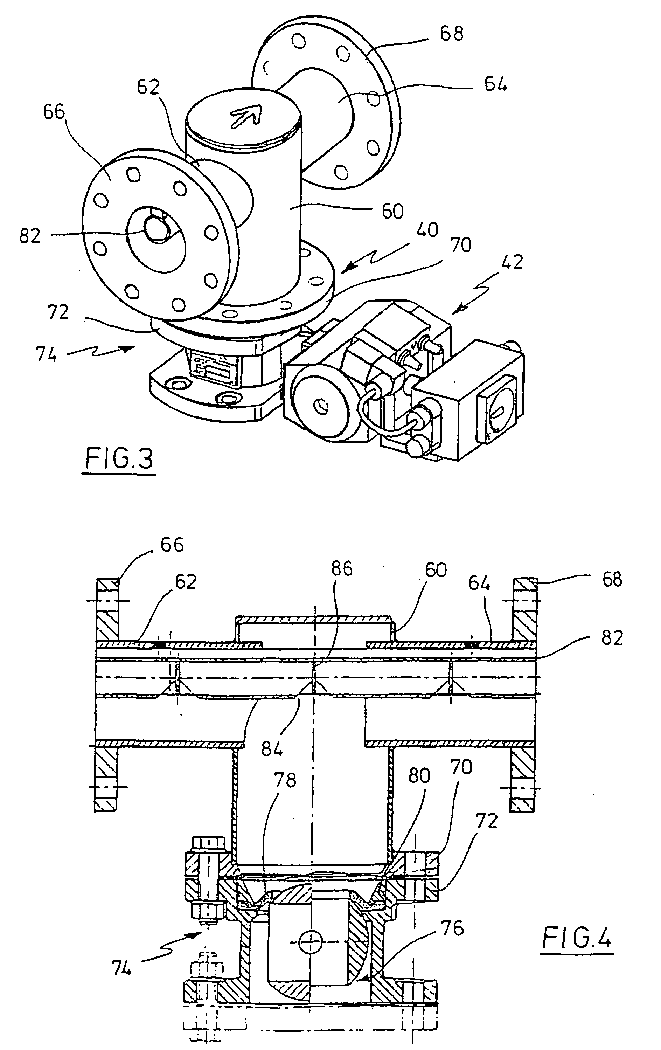

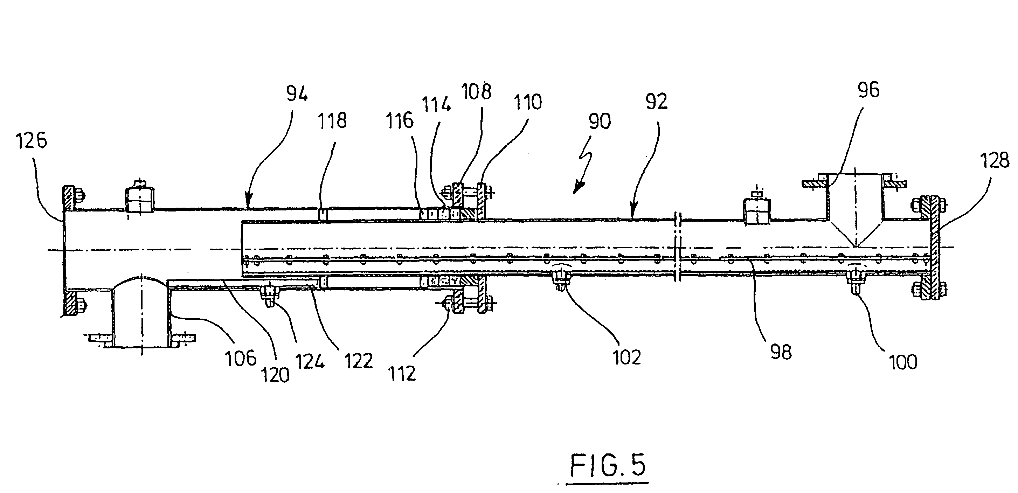

In den Figuren 3 und 4 ist ein Ventil 40 näher dargestellt. Man erkennt aus Fig. 3, daß das Ventil am unteren Ende eines zylindrischen Behälters 60 angeordnet ist, mit dem auf gegenüberliegenden Seiten Rohrstücke 62, 64 verbunden sind, beispielsweise durch Schweißung. An den Enden der Rohrstücke 62, 64 sitzen Flansche 66, 68 zum Anschluß an das zugeordnete Ende der Förderleitung 16 (nicht gezeigt). An das untere Ende des zylindrischen Behälters 60 ist ein Flansch 70 angeschweißt zur Verbindung mit dem oberen Flansch 72 des Gehäuses 74 des Ventils 40.

Das zylindrische Ventilgehäuse 74 lagert eine Ventilkugel 76 um eine horizontale Achse. Die Betätigung der Ventilkugel 76 zur Verstellung um einen Winkel von ±90° erfolgt durch die pneumatische Betätigungsvorrichtung 42, auf die im einzelnen nicht eingegangen werden soll, da derartige Vorrichtungen zum Stand der Technik gehören.

Wie aus den zwei verschiedenen Stellungen in Fig. 4 zu erkennen, kann mit Hilfe der Ventilkugel 76 der Durchgang nach unten aus dem zylindrischen Behälter 60 freigegeben oder gesperrt werden. Zu diesem Zweck ist eine elastische Ringdichtung 78 zwischen einem Absatz des Gehäuses 74 und einem Spannring 80 eingespannt, die unter Spannung nach oben gewölbt und gegen die Außenseite der Ventilkugel 76 zur Anlage gebracht ist. In der Schließstellung der Ventilkugel 76 wird mit Hilfe der Dichtung 78 ein Durchgang nach unten gesperrt. Da im Vorlagebehälter 26 ein viel geringerer Druck herrscht als in der Förderleitung 16, führt die Druckdifferenz am Dichtring 78 dazu, daß er mit einer relativ großen Kraft gegen die Außenseite der Ventilkugel 76 angedrückt wird. Im übrigen besteht relativ viel Freiraum zwischen Kugel 78 und dem Gehäuse 74, so daß sich Material nicht festsetzen kann und die Gängigkeit der Ventilkugel 76 beeinträchtigt.

Es bleibt noch zu erwähnen, daß in der Förderleitung 16 und somit auch in den Rohrstücken 62, 64, z. B. eine im Durchmesser kleinere Druckluftleitung 82 angeordnet ist, die in Abständen nach unten weisende Einschnittöffnungen 84 aufweist, in deren Bereich eine Blende 86 angeordnet ist. Eine derartige Ausführung einer pneumatischen Förderleitung ist jedoch an sich bekannt.

In Fig. 5 ist bei 90 ein Beispiel für eine Förderrinne gezeigt, welche aus einem ersten rohrartigen Rinnenabschnitt 92 und einem zweiten rohrartigen Abschnitt 94 zusammengesetzt ist, wobei letzterer teleskopisch mit ersterem zusammenwirkt. Der Rinnenabschnitt 92 ist über den seitlichen Stutzen 96 mit dem nicht gezeigten Vorlagebehälter verbunden, beispielsweise dem Vorlagebehälter 26 nach den Fign. 1 und 2. Er weist im unteren Bereich ein luftdurchlässiges Rinnengewebe 98 auf, das bei 100 bzw. 102 an Druckluft angeschlossen ist zwecks Auflockerung des Materials, das über den Stutzen 96 in die Rinne 90 eintritt. Der zweite Abschnitt 94 weist einen Abgangsstutzen 106 auf, der mit einer Zelle eines Aluminiumschmelzofens oder auch einer weiteren Förderrinne fest verbunden wird. Die Förderrinne kann somit den räumlichen Gegebenheiten in Längsrichtung angepaßt werden.

Der rohrartige Abschnitt 94 ist an einem Ende mit einem Flansch 108 versehen, der mit einem Ring 110 über Schrauben 112 verbunden ist zwecks Einspannung einer Dichtungspackung 114, die rohrseitig bei 116 gegen einen Ring zur Anlage gebracht ist, der mit dem Abschnitt 94 verschweißt ist. Ein weiterer Ring 118 innerhalb des Abschnitts 94 dient zur Führung zwischen den Abschnitten 92, 94.

Im zweiten Abschnitt 94 ist bei 120 ein perforiertes Blech 120 gezeigt, wodurch ein unterer Rinnenabschnitt 122 gebildet ist, der mit einem Druckluftanschluß 124 versehen ist zwecks Auflockerung des Materials, das vom ersten Abschnitt 92 in den zweiten Abschnitt 94 gelangt, bevor es in den Stutzen 106 einfällt. Das Ende des zweiten Abschnitts 94 ist mit einem Blindflansch 126 abgeschlossen.

Es ist auch denkbar, mit dem zweiten Abschnitt in Abständen mehrere Stutzen vorzusehen, die jeweils mit einer Elektrolytzelle eines Aluminiumschmelzofens verbunden sind. In diesen Fall kann zwischen den Stutzen oder Abgängen ebenfalls eine Auflockerungsmöglichkeit vorgesehen werden, wie sie bei 120 dargestellt ist.

Der erste Rinnenabschnitt 92 ist am rechten Ende bei 128 ebenfalls mit einem Blindflansch dichtend abgeschlossen.

Die in den Figuren 1 bis 5 gezeigte und oben beschriebene Anlage läßt sich für andere Verbraucher von Schüttgütern verwenden, bei denen die Verbraucher gruppenweise angeordnet sind sowie bei räumlicher Trennung der einzelnen Gruppen.

## Patentansprüche

1. Anlage zum Beschicken einer Mehrzahl von Verbrauchern, z.B. von Zellen von Aluminiumschmelzöfen mit Schüttgut, z.B. pulverförmigem Aluminiumoxid mit
einem Silo (10) für das Schüttgut
einer Druckgefäß- oder Pumpfördervorrichtung (14), die mit
einer Förderleitung (16) verbunden ist
einer Mehrzahl von Vorlagebehältern (26) nahe den Verbrauchern (34, 36), die über Ventile (40) an die Förderleitung (16) angeschlossen sind und mindestens einer pneumatischen Rohr- bzw. Förderrinne (28, 30), die einen Vorlagebehälter (26) mit einer Mehrzahl von Verbrauchern (50, 52) der Öfen (34, 36) verbindet, wobei die Rohr- bzw. Förderrinne (28, 30) mindestens einen Abgang (38) je Verbraucher (50, 52) aufweist.

2. Anlage nach Anspruch 1, **dadurch gekennzeichnet, daß** die Vorlagebehälter (26) eine Füllstandsmeßvorrichtung (48) aufweisen, die mit einer Steuervorrichtung für das zugeordnete Ventil (40) verbunden ist und das Ventil (40) schließt, wenn der Füllstand eine vorgegebene Höhe erreicht hat.

3. Anlage nach Anspruch 1 oder 2, **dadurch gekennzeichnet, daß** mindestens zwei pneumatische Rohr- bzw. Förderrinnen (28, 30) mit dem Vorlagebehälter (26) verbunden sind.

4. Anlage nach einem der Ansprüche 1 bis 3, **dadurch gekennzeichnet, daß** eine Überwachungs- und Anzeigevorrichtung (46) für die Füllventile (40) vorgesehen ist, die feststellt und/oder anzeigt, wenn ein Ventil (40) nicht den vorgegebenen Schaltzustand aufweist.

5. Anlage nach einem der Ansprüche 1 bis 4, **dadurch gekennzeichnet, daß** im Gehäuse (74) des Ventils (40) ein Ventilglied von einer einen axialen Durchgang (77) aufweisenden Ventilkugel (76) drehbar gelagert ist, ein elastischer Dichtring (78) auf der der Förderleitung (16) zugewandten Seite der Ventilkugel (76) angeordnet ist und dichtend mit dieser zusammenwirkt, während auf der gegenüberliegenden Seite die Ventilkugel (76) einen Abstand zur Wandung des Ventilgehäuses (74) aufweist.

6. Anlage nach Anspruch 5, **dadurch gekennzeichnet, daß** die Förderleitung (16) an gegenüberliegenden Seiten an einen zylindrischen, nach unten offenen Behälter angeschlossen ist und das Ventilgehäuse (74) am unteren Ende des zylindrischen Behälters (60) angebracht ist.

7. Anlage nach einem der Ansprüche 1 bis 6, **dadurch gekennzeichnet, daß** die Förderrinne (90) einen ersten fest mit dem Vorlagebehälter oder einem Rinnenabschnitt verbindbaren ersten Abschnitt (92) aufweist, und einen zweiten Abschnitt (94), der seitlich mindestens einen Abgang (106) aufweist und teleskopisch mit dem ersten Rinnenabschnitt (92) oder einem weiteren Rinnenabschnitt zusammenwirkt.

8. Anlage nach Anspruch 7, **dadurch gekennzeichnet, daß** der zweite Abschnitt (94) zwischen dem Abgang (106) und dem ersten Abschnitt (92) als pneumatische Förderrinne (120, 124) ausgebildet ist.

9. Anlage nach Anspruch 7 oder 8, **dadurch gekennzeichnet, daß** erster und zweiter Abschnitt (92, 94) als Rohre geformt sind.

## Claims

1. Installation for feeding a plurality of loads, e.g. of cells of aluminium melting furnaces, with bulk material, e.g. pulverised aluminium oxide, said installation comprising
a silo (10) for the bulk material
a pressure vessel or pump delivering machinery (14), connected with
a conveying line (16);
a plurality of receiving vessels (26) in the vicinity of the loads (34, 36), said receiving vessels being connected with the conveying line (16) via valves (40), and
at least one pneumatic conveying chute or pneumatic pipe channel (28,30), respectively, connecting a receiving vessel (26) with a plurality of loads (50,52) of the furnaces (34, 36), said conveying chute or pipe channel (28, 30), respectively, comprising at least one discharge (38) per load (50,52).

2. The installation as claimed in claim 1, **characterised in that** said receiving vessels (26) comprise a fill level indicator (48), said fill level indicator being connected with a controlling means for the related valve (40) and closing the valve (40), when the fill level has reached a predetermined height.

3. The installation as claimed in claim 1 or claim 2, **characterised in that** at least two pneumatic conveyer chutes or pneumatic pipe channels (28, 30), respectively, are connected with the receiver vessel (26).

4. The installation as claimed in any one of the claims 1 to 3, **characterised in that** a monitoring and indicating device (46) is provided for the feed valves (40), said device determining and/or indicating when a valve (40) does not have the preset switching condition.

5. The installation as claimed in any one of the claims 1 to 4, **characterised in that** in the body (74) of the valve (40) a valve member of a valve ball (76) comprising an axial passage (77) is rotationally mounted, an elastic sealing ring (78) is disposed on the side of the valve ball (76) facing the conveying line (16) and being in sealing co-operation with said valve ball, whereas on the opposing side the valve ball (76) features a spacing to the wall of the valve body (74).

6. The installation as claimed in claim 5, **characterised in that** the conveying line (16) is connected at opposing sides to a cylindrical vessel open-ended in the downward direction, and the valve body (74) is disposed at the bottom end of said cylindrical vessel (60).

7. The installation as claimed in any one of the claims 1 to 6, **characterised in that** the conveying chute (90) comprises a first segment (92) that is rigidly connectable with the receiving vessel or a chute segment, and a second segment (94) having laterally at least one discharge (106) and co-operating in a telescopic manner with the first chute segment (92) or a further chute segment.

8. The installation as claimed in claim 7, **characterised in that** the second segment (94) between the discharge (106) and the first segment (92) is constructed as a pneumatic conveying chute (120, 124).

9. The installation as claimed in claim 7 or 8, **characterised in that** said first and second segments (92, 94) are constructed as pipes.

## Revendications

1. Installation pour alimenter une multiplicité d'utilisateurs, par exemple, des cellules de four de fusion d'aluminium avec du produit en vrac, par exemple de l'oxyde d'aluminium, comportant
un silo (10) pour le produit en vrac,
un dispositif de transport à récipient de pression ou à pompe (14), qui est relié à une conduite de transport (16),
une multiplicité de réservoirs de collecte (26) au voisinage des utilisateurs (34, 36), qui sont raccordés par des soupapes (40) à la conduite de transport (16), et
au moins une goulotte ou un tube de transport pneumatique (28, 30), qui relie un réservoir de collecte (26) à une multiplicité d'utilisateurs (50, 52) des fours (34, 36), la goulotte ou le tube de transport pneumatique (28, 30) présentant au moins une sortie (38) pour chaque utilisateur (50, 52).

2. Installation suivant la revendication 1, **caractérisée en ce que** les réservoirs de collecte (26) présentent un dispositif de mesure de remplissage (48), qui est relié à un dispositif de commande pour la soupape associée (40) et ferme la soupape (40) quand le niveau de remplissage a atteint une hauteur prédéterminée.

3. Installation suivant la revendication 1 ou 2, **caractérisée en ce qu'**au moins deux goulottes ou tubes de transport pneumatique (28, 30) sont reliés au réservoir de collecte (26).

4. Installation suivant l'une des revendications 1 à 3, **caractérisée en ce qu'**il est prévu un dispositif de surveillance et d'indication (46) pour les soupapes de remplissage (40), qui détermine et/ou indique quand une soupape (40) ne présente pas l'état de commutation prédéfini.

5. Installation suivant l'une des revendications 1 à 4, **caractérisée en ce que**, dans le carter (74) de la soupape (40), un organe de soupape est monté à rotation et logé par une sphère de soupape (76) présentant un passage axial (77), un joint d'étanchéité annulaire (78) élastique est disposé sur la face de la sphère de soupape (76) tournée vers la conduite de transport (16) et coopère avec elle pour l'étanchéification, tandis que, sur la face opposée, la sphère de soupape (76) présente une distance par rapport à la paroi du carter de soupape (74).

6. Installation suivant la revendication 5, **caractérisée en ce que** la conduite de transport (16) est raccordée sur des faces opposées à un réservoir cylindrique, ouvert vers le bas, et le carter de soupape (74) est installé contre l'extrémité inférieure du réservoir cylindrique (60).

7. Installation suivant l'une des revendications 1 à 6, **caractérisée en ce que** la goulotte de transport (90) présente une première partie (92) pouvant être reliée de façon fixe au réservoir de collecte ou à une partie de goulotte, et présente une deuxième partie (94) qui, à son tour, présente latéralement au moins une sortie (106) et coopère de manière télescopique avec la première partie de goulotte (92) ou avec une autre partie de goulotte.

8. Installation suivant la revendication 7, **caractérisée en ce que** la deuxième partie (94) est réalisée sous la forme d'une goulotte de transport pneumatique (120, 124), entre la sortie (106) et la première partie (92).

9. Installation suivant la revendication 7 ou 8, **caractérisée en ce que** la première et la deuxième partie (92, 94) sont réalisées sous la forme de tubes.
